# EUROPÄISCHE PATENTANMELDUNG

(11) **EP 2 431 268 A1**
(43) Veröffentlichungstag der Anmeldung: **21.03.2012**
(21) Anmeldenummer: 11006611.5
(22) Anmeldetag: 11.08.2011
(51) Int. Cl.: B62K 21/26

(54) **Fahrrad-Lenkergriff**

(30) Priorität: 20.09.2010 DE 102010045820
(71) Anmelder: Wilhelm Humpert GmbH & Co.KG, 58739 Wickede / Ruhr (DE)
(72) Erfinder: Häcker, Rolf G., 70736 Fellbach (DE)
(74) Vertreter: Lenzing Gerber Stute

(57) **Zusammenfassung**

Die Erfindung betrifft eine Handballenauflage (2) für einen Fahrradlenker, aufweisend ein Auflageelement (2a) und ein auf ein Ende eines rohrförmigen Fahrradlenkers aufsetzbares Auge (2b), das drehfest mit einem flexiblen Bereich (2c) verbunden ist und das mittels Befestigungsmitteln an dem Ende befestigbar ist.

## Beschreibung

Die vorliegende Erfindung betrifft einen Fahrrad Lenkergriff mit den Merkmalen des Oberbegriffs des Anspruchs 1 sowie eine separat von einem Lenkergriff montierbare Handballenauflage.

Fahrradlenkergriffe sind in vielfältigen Bauformen bekannt. Sie werden an den Griffenden von Fahrradlenkerrohren angebracht, um dort dem Fahrer einen sicheren und komfortablen Griff auf den Fahrradlenker zu ermöglichen. Die einfachsten Lenkergriffe bestehen aus Gummi- oder Kunststoffhülsen, die ohne weitere Befestigung auf das Lenkerende geschoben werden. Diese Lenkergriffe verdrehen sich in der Praxis häufig, was die Sicherheit beeinträchtigt.

Andere Lenkergriffe sind mit Befestigungsmöglichkeiten versehen, so zum Beispiel in der Patentschrift FR 394412. Diese Patentschrift offenbart einen Lenkergriff mit einer geschlitzten Hülse und einer einseitig an dem Lenkergriff angeordneten Klemmschelle, die die Hülse umschlingt. Das Griffmaterial ist fest mit der Hülse verbunden. Der Griff wird zur Montage mit der Klemmschelle voraus auf das Lenkerrohr geschoben, positioniert und dann durch Anziehen der Klemmschelle befestigt.

Andere Lenkergriffe sind ebenfalls mit einer einseitigen Klemmschelle versehen, die jedoch an der Lenkeraußenseite des Griffs angeordnet sind. Solche Lenkergriffe sind aus den Druckschriften EP 1051324 B1 und EP 1394033 A1 bekannt. Die dort beschriebenen Lenkergriffe sind nicht nur mit einer Klemmschelle zur Befestigung auf dem Lenkerende versehen, sondern weisen außerdem eine ergonomische Form auf, die die Druckbelastung der Hände beim Fahrradfahren reduzieren soll. Insbesondere in der EP 1051324 B1 ist in der Figur 9 ein Lenkergriff veranschaulicht, der eine Klemmschelle und eine Handballenauflage aufweist, die in ihren Oberflächen ineinander übergehen.

Weiter ist in dieser Druckschrift die Möglichkeit offenbart, einen mit Handballenauflage versehenen Lenkergriff zusätzlich mit einem sogenannten Lenkerhörnchen oder "bar-end" zu kombinieren.

Schließlich zeigt die Druckschrift EP 1712460 B1 einen ergonomisch ausgeformten Fahrradlenkergriff mit Handballenauflage, bei dem eine geschlitzte Hülse im Innern des Griffteils angeordnet ist. Der geschlitzte Bereich ist teilweise von dem Griffmaterial freigestellt. Ein Lenkerhörnchen oder eine separate Klemmschelle können auf den geschlitzten Bereich aufgesetzt werden, um den Lenkergriff auf dem Lenkerende zu fixieren. Dabei ist die Handballenauflage zu dem Lenkerende hin so weit in Axialrichtung der geschlitzten Hülse verlängert, dass sie außen mit der geschlitzten Hülse in einer Ebene abschließt.

Die oben erwähnten ergonomisch ausgeformten Lenkergriffe sind so aufgebaut, dass das Material welches den rohrförmigen Griffteil bildet, mit der Handballenauflage im Bereich des freien Lenkerendes einstückig hergestellt ist. Die Kombinationsmöglichkeit der Materialien ist deshalb sehr eingeschränkt. In der Praxis ist der Handgriffabschnitt aus dem gleichen Material wie die Handballenauflage gefertigt. Bei aufwendigeren Lenkergriffen ist im Spritzgussverfahren ein Elastomerteil aus zwei verschiedenen Komponenten coextrudiert, die jedoch vom Material her sehr ähnlich sein müssen. Außerdem ist die Winkelorientierung zwischen dem Handgriffteil und der Handballenauflage bei einstückiger Bauweise festgelegt, so dass hier keine Variationsmöglichkeit besteht.

Es ist deshalb Aufgabe der vorliegenden Erfindung, einen Lenkergriff zu schaffen, bei dem eine Handballenauflage mit oder ohne Lenkerhörnchen in einer gegenüber dem Handgriff veränderbaren Stellung montierbar ist. Weiter ist es Aufgabe der vorliegenden Erfindung, eine Handballenauflage zur Montage an einem Lenkerende zu schaffen, die mit verschiedenen Handgriffen kombinierbar ist.

Diese Aufgabe wird von einem Lenkergriff mit den Merkmalen des Anspruchs 1 gelöst.

Weil die Handballenauflage ein auf einem Lenkerende aufsetzbares befestigtes Auge aufweist, das drehfest mit einem sich in Axialrichtung des Lenkers erstreckenden Bereich verbunden ist, wobei der Bereich in Radialrichtung des Fahrradlenkers zur Klemmbefestigung an dem Lenkerende flexibel ausgebildet ist, und wobei das Auge mit einer auf den Bereich aufsetzbaren Klemmschelle versehen ist, mittels derer die Handballenauflage an dem Lenkerende in einer in Umfangsrichtung wählbaren Position befestigbar ist, kann die Handballenauflage neben einen bereits auf dem Fahrradlenker befestigten Handgriff auf das Lenkerende aufgeschoben werden und dort mittels einer separaten Klemmschelle oder eines Lenkerhörnchens in beliebiger Position befestigt werden. Insbesondere ist auch die Kombination einer Handballenauflage mit einem bereits montierten Handgriff möglich. Für den Benutzer ergibt sich der Vorteil dass der Lenkerhandgriff beliebig gewählt werden kann und nun eine Handballenauflage zur Kombination mit dem bevorzugten Lenkerhandgriff verfügbar ist. Weiter kann bei fest montiertem Lenkerhandgriff die Handballenauflage in der Höhe verstellt werden. Bei ergonomischer Ausformung auch des Lenkergriffs ist hier eine Anpassung der Orientierung der beiden ergonomischen Konturen möglich.

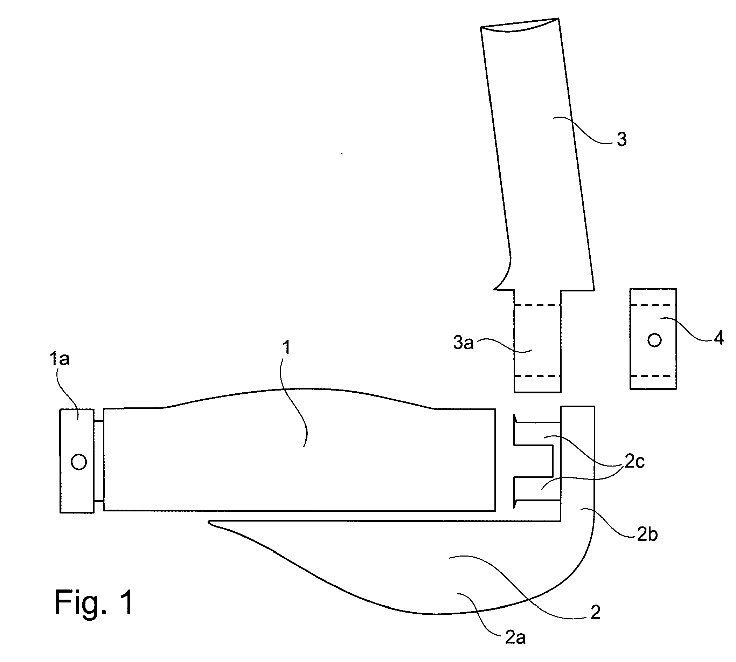

Nachfolgend wird ein Ausführungsbeispiel der Erfindung anhand der Zeichnung beschrieben. Dabei zeigt die Figur 1 eine Anordnung zur Montage auf einem Fahrradlenkerende.

In der Figur 1 ist ein erfindungsgemäßer Fahrradlenkergriff in seinen Einzelteilen dargestellt. Die Anordnung wird insgesamt nachfolgend als Lenkergriff bezeichnet. Dargestellt ist zunächst ein Handgriff 1, der im wesentlichen in bekannter Weise aufgebaut ist. Die Außenseite des Handgriffs 1 ist aus einem Material geformt, das dem Fahrer während der Fahrer einen sicheren Halt und eine angenehme Benutzung gewährleistet. Für das hier beschriebene Beispiel kann der Handgriff 1 mit einer Oberfläche aus Gummi versehen sein.

Innen in dem Handgriff 1 ist in bekannter Weise eine Hülse angeordnet, die an dem der Lenkermitte zugewandten Ende eine Klemmschelle 1a trägt. Die Klemmschelle 1a dient zur Befestigung des Handgriffs 1 an einer gewählten Position in Längsrichtung des Fahrradlenkers und einer bestimmten Winkelorientierung in Umfangsrichtung des Fahrradlenkers, die dem Benutzer geeignet erscheint.

Gegenüber der Klemmschelle 1a ist der Handgriff 1 mit einem stumpfen Ende und einer freien Öffnung versehen, durch die das freie Ende des Fahrradlenkers ein Stück weit aus dem Handgriff 1 austreten kann. Bei befestigter Klemmschelle 1a kann das Ende des nicht dargestellten Fahrradlenkers beispielsweise etwa 20 Millimeter über das freie Ende des Handgriffs 1 hinaus stehen.

Eine Handballenauflage 2 ist flügelartig ausgebildet und weist ein etwa plattenförmiges Auflageelement 2a auf, das sich bei Montage parallel zu dem Handgriff 1 erstreckt. Weiter ist ein Befestigungsauge 2b vorgesehen, das ringförmig zum Aufstecken der Handballenauflage 2 auf ein Lenkerende ausgebildet ist. Hier ist eine auf den Lenker zu weisende, in Radialrichtung flexible Hülse angeordnet. Die Hülse ist bei dieser Ausführungsform geschlitzt und weist zwei Bereiche 2c auf, die in Anlage mit dem Lenkerrohr zu bringen sind. Die Hülse kann in das Befestigungsauge 2b eingesetzt oder damit einstückig ausgebildet sein.

Ein Lenkerhörnchen 3 ist mit einer Klemmschelle 3a versehen, die über die Bereiche 2c der Handballenauflage 2 führbar ist. Die Klemmschelle 3a kann zur Befestigung des Lenkerhörnchens 3 angezogen werden. Schließlich ist alternativ eine ringförmige Klemmschelle 4 vorgesehen, die in der Kontur etwa dem freien Ende des Handgriffs 1 entspricht.

Das Lenkerhörnchen 3 und die Klemmschelle 4 sind wahlweise mit der Handballenauflage 2 zu verbinden.

Zur Montage des Lenkergriffs auf einem freien, rohrförmigen Ende eines Fahrradlenkers wird zunächst der Handgriff 1 mit der Klemmschelle 1a voraus auf das Lenkerende aufgeschoben. In der axialen Position wird der Handgriff 1 so weit auf den Lenker aufgeschoben, dass das freie Lenkerende über den Handgriff 1 hinaus steht, und zwar so weit, wie die axiale Erstreckung des Befestigungsauges 2b und der angrenzenden Bereiche 2c es erfordert. Der Handgriff 1 wird dann in der Umfangsrichtung des Lenkers so positioniert, dass der Fahrer ein angenehmes Griffgefühl erhält. Nun wird das Lenkerhörnchen 3 mit der Klemmschelle 3a auf die Bereiche 2c aufgesetzt, wobei die Klemmschelle 3a noch nicht angezogen wird. Die so zusammengesetzte Baugruppe aus Lenkerhörnchen 3 und Handballenauflage 2 wird auf das freie Lenkerende geschoben, bis es an der Stirnseite des Handgriffs 1 anliegt. Nun wird in Umfangsrichtung die Position der Handballenauflage 2 so eingestellt, dass für den Fahrer eine optimale Unterstützung des Handballens erfolgt. Der Handgriff 1 wird dabei nicht gedreht. Schließlich wird noch die Ausrichtung des Lenkerhörnchens 3 vorgenommen, die so sein sollte, dass der Fahrer im Stehen das Lenkerhörnchen ergreifen kann, ohne das Handgelenk abzuwinkeln. Nach Einstellung dieser beiden Bauelemente wird die Klemmschelle 3a angezogen, wodurch zum einen das Lenkerhörnchen 3 an der Handballenauflage 2 befestigt wird und zum anderen aufgrund der Flexibilität der Bereiche 2c, die bei dieser Ausführungsform laschenartig ausgebildet sind, auch die Handballenauflage 2 auf dem freien Lenkerende festgeklemmt wird.

Wenn der Benutzer kein Lenkerhörnchen in Kombination mit der Handballenauflage 2 verwenden möchte, so wird anstelle des Lenkerhörnchens 3 die Klemmschelle 4 auf die Bereiche 2c aufgesetzt, bevor die Handballenauflage 2 an dem Lenkerende montiert wird. Nach Einstellen der Position der Handballenauflage 2 kann dann die Klemmschelle 4 angezogen werden, so dass die Handballenauflage 2 an dem Lenkerende befestigt wird.

Diese technische Lösung ermöglicht es, einen Lenkerhandgriff 1 mit einem ausgeprägt unrunden Profil, beispielsweise einem ergonomisch ausgebildeten sechseckigen Profil zu verwenden, dessen Position durch die Haltung der Fingergelenke des Fahrers vorgegeben ist, und dennoch die Position der Handballenauflage 2 unabhängig von der Ausrichtung des Handgriffs 1 einzustellen. Außerdem ist eine Kombination von Materialien des Handgriffs 1 und der Handballenauflage 2 möglich, die bislang ausgeschlossen war. So ist beispielsweise ohne weiteres die Kombination eines Lenkerhandgriffs 1 mit Lederoberfläche mit einer Handballenauflage 2 aus Kunststoff, Metall oder Kohlefaser möglich. Solche Kombinationen sind zum Beispiel dann gewünscht, wenn ein sicherer Halt auf dem Lenkerhandgriff 1 gewährleistet sein soll, der Fahrer sich aber ein leichtes Verändern der Handballenposition auf der Handballenauflage 2 wünscht, um seine Handhaltung während der Fahrt einfach variieren so können. Dies wird durch eine glatte, beispielsweise metallische Oberfläche der Handballenauflage 2 oder insgesamt metallische Ausführung ermöglicht.

Das Auflageelement 2a der Handballenauflage 2 erstreckt sich in Axialrichtung parallel zu dem Handgriff 1 und kann bezogen auf die Länge des Handgriffs 1 etwa 50% oder bei anderen Ausführungen 75% bis 100% der Länge des Handgriffs aufweisen.

Der Lenkergriff kann als Kombination aller oben beschriebenen Teile angeboten werden, es kann aber auch vorgesehen sein, nur die Handballenauflage 2 mit dem Lenkerhörnchen 3 und der Klemmhülse 4 anzubieten.

## Patentansprüche

1. Lenkergriff mit einem Handgriff (1) und einer Handballenauflage (2), **dadurch gekennzeichnet, dass** die Handballenauflage (2) ein Auflageelement (2a) und ein auf ein Ende eines rohrförmigen Fahrradlenkers aufsetzbares Auge (2b) aufweist, das drehfest mit einem in Radialrichtung des Fahrradlenkers flexiblen Bereich (2c) verbunden ist und das mittels Befestigungsmitteln an dem Ende befestigbar ist.

2. Lenkergriff nach Anspruch 1, **dadurch gekennzeichnet, dass** eine Klemmschelle (3a, 4) auf den flexiblen Bereich (2c) aufsetzbar ist.

3. Lenkergriff nach einem der vorhergehenden Ansprüche, **dadurch gekennzeichnet, dass** die Handballenauflage (2) mittels der Klemmschelle (3a, 4) an einem Lenkerende des Fahrradlenkers in einer in Umfangsrichtung wählbaren Position befestigbar ist.

4. Handballenauflage (2) für einen Fahrradlenker, aufweisend ein Auflageelement (2a) und ein auf ein Ende eines rohrförmigen Fahrradlenkers aufsetzbares Auge (2b), das drehfest mit einem flexiblen Bereich (2c) verbunden ist und das mittels Befestigungsmitteln an dem Ende befestigbar ist.
